# EUROPÄISCHE PATENTSCHRIFT

(11) **EP 1 782 515 B1**
(45) Veröffentlichungstag und Bekanntmachung des Hinweises auf die Patenterteilung: **03.10.2012**
(21) Anmeldenummer: 05781704.1
(22) Anmeldetag: 02.08.2005
(51) Int. Cl.: H02G 3/32, G02B 6/46, F16L 3/22

(54) **KABELCLIP**
CABLE CLIP
SERRE-CABLE

(30) Priorität: 27.08.2004 DE 202004013412 U
(43) Veröffentlichungstag der Anmeldung: 09.05.2007
(73) Patentinhaber: CCS Technology, Inc., Wilmington, DE 19803 (US)
(72) Erfinder: LAPP, Oliver, 42399 Wuppertal (DE); FRÖHLICH, Franz-Friedrich, 58091 Hagen (DE)
(74) Vertreter: Sturm, Christoph
(86) Internationale Anmeldenummer: PCT/EP2005/008335
(87) Internationale Veröffentlichungsnummer: WO 2006/024355

(56) Entgegenhaltungen:
- US-A- 3 363 864
- US-A- 3 861 015
- US-A- 5 587 555
- ANONYM: "Online Katalog der Firma RICHCO INC, Katalognummer OFB-BH-6-19 O.F. (Bracket blind hole series)" INTERNET ARTIKEL, [Online] XP002355043 Gefunden im Internet: URL:http://www.richco-inc.com/group_detail s.asp?seccode=350&grpcode=130>

## Beschreibung

Die vorliegende Erfindung betrifft einen Kabelclip, insbesondere einen Lichtwellenleiter-Patchkabel-Clip, nach dem Oberbegriff des Anspruchs 1.

Aus dem Prospekt "Fibre Optic Management Solutions 2002, International Edition, Seite 15" der Firma Richco sind Kabelclips für Lichtwellenleiter-Patchkabel bekannt, die einen Grundkörper mit einem Befestigungsabschnitt und einem Halteabschnitt aufweisen. Der Befestigungsabschnitt der dort gezeigte Kabelclips dient dem Befestigen des Kabelclips auf einem Träger, wobei der Befestigungsabschnitt entweder als Klebstoffschicht ausgebildet ist oder mehrere widerhakenartige Verankerungselemente aufweist, über welche der Befestigungsabschnitt in ein Loch des Trägers eingesteckt werden kann. Die Halteabschnitte der in diesem Stand der Technik gezeigten Kabelclips verfügen entweder über zwei oder drei nebeneinander angeordnete, clipartige Halteelemente, die jeweils der Aufnahme von zwei Patchkabeln dienen. Bei den in diesem Stand der Technik gezeigten Kabelclips sind alle clipartigen Halteelemente des Halteabschnitts jeweils in einer Ebene seitlich versetzt zueinander angeordnet.

Ein Kabelclip gemäß dem Oberbegriff des Anspruchs 1 ist aus der Internet Veröffentlichung XP 002355043 bekannt.

Weitere Kabelhaltvorrichtungen sind aus US-A-5 587 555, aus US-A-3 363 864 und aus US-A-3 861 015 bekannt.

Hiervon ausgehend liegt der vorliegenden Erfindung das Problem zu Grunde, einen neuartigen Kabelclip zu schaffen.

Dieses Problem wird durch einen Kabelclip mit den Merkmalen des Anspruchs 1 gelöst.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1:: einen erfindungsgemäßen Kabelclip nach einem ersten Ausführungsbeispiel der Erfindung in einer ersten perspektivischen Ansicht;
- Fig. 2:: den erfindungsgemäßen Kabelclip der Fig. 1 in einer zweiten perspektivischen Ansicht;
- Fig. 3:: den erfindungsgemäßen Kabelclip der Fig. 1 und 2 in einer Ansicht von vorne;
- Fig. 4:: den erfindungsgemäßen Kabelclip der Fig. 1 und 2 in einer Ansicht von hinten;
- Fig. 5:: den erfindungsgemäßen Kabelclip der Fig. 1 und 2 in Seitenansicht;
- Fig. 6:: den erfindungsgemäßen Kabelclip der Fig. 1 und 2 in Draufsicht;
- Fig. 7:: einen erfindungsgemäßen Kabelclip nach einem zweiten Ausführungsbeispiel der Erfindung in einer ersten perspektivischen Ansicht;
- Fig. 8:: den erfindungsgemäßen Kabelclip der Fig. 7 in einer zweiten perspektivischen Ansicht;
- Fig. 9:: den erfindungsgemäßen Kabelclip der Fig. 7 und 8 in einer Ansicht von vorne;
- Fig. 10:: den erfindungsgemäßen Kabelclip der Fig. 7 und 8 in einer Ansicht von hinten;
- Fig. 11:: den erfindungsgemäßen Kabelclip der Fig. 7 und 8 in Seitenansicht;
- Fig. 12:: den erfindungsgemäßen Kabelclip der Fig. 7 und 8 in Draufsicht;

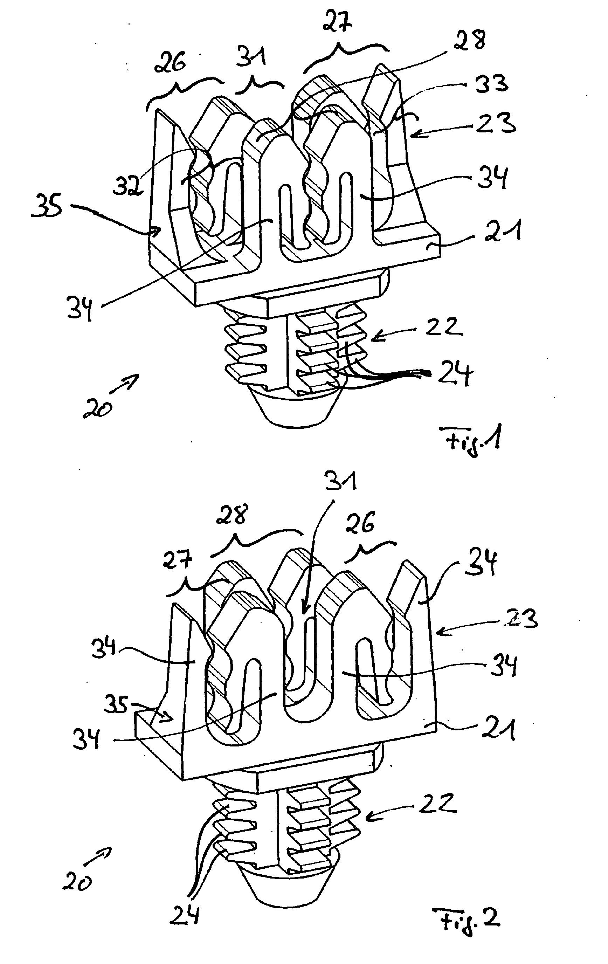

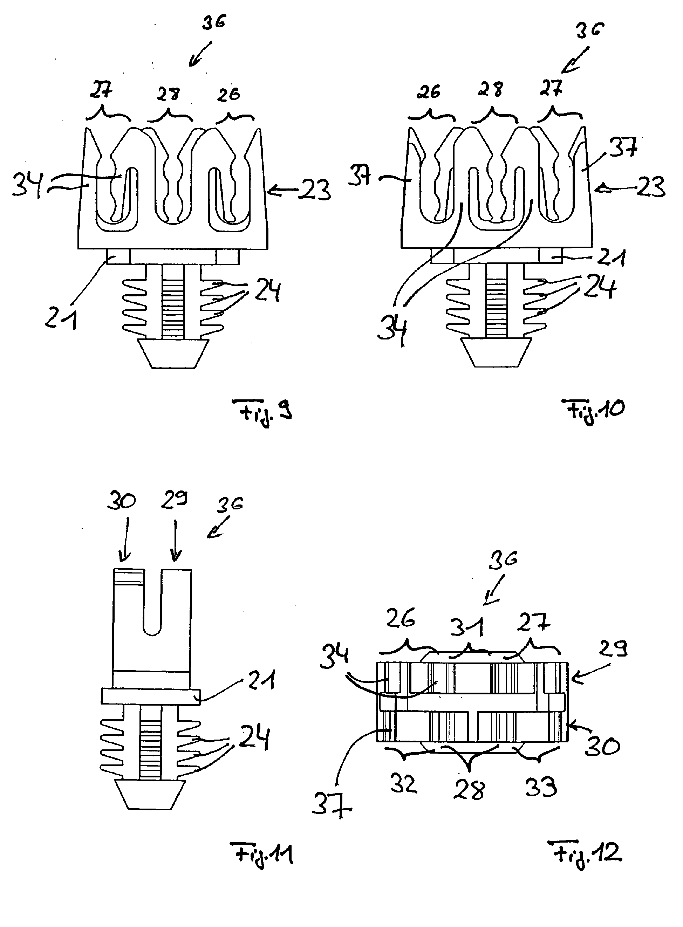

Nachfolgend wird die hier vorliegende Erfindung unter Bezugnahme auf die Fig. 1 bis 12 am Beispiel von als Lichtwellenleiter-Patchkabel-Clips ausgeführten Kabelclips in größerem Detail beschrieben. Ein Lichtwellenleiter-Patchkabel-Clip wird nachfolgend kurz als Patchkabel-Clip bezeichnet.

Fig. 1 bis 6 zeigen ein erstes Ausführungsbeispiel eines erfindungsgemäßen Patchkabel-Clips 20 in unterschiedlichen Ansichten. Der Patchkabel-Clip 20 des Ausführungsbeispiels der Fig. 1 bis 6 verfügt über einen Grundkörper 21, wobei der Grundkörper 21 einen Befestigungsabschnitt 22 zur Befestigung des Patchkabel-Clips 20 an bzw. auf einem nicht-dargestellten Träger und einen Halteabschnitt 23 für Patchkabel aufweist.

Der Befestigungsabschnitt 22 umfasst im gezeigten Ausführungsbeispiel mehrere widerhakenartige Verankerungselemente 24, mithilfe derer der Patchkabel-Clip 20 in einem Loch des nicht-dargestellten Trägers lösbar verankert werden kann. Die genaue Ausgestaltung des Befestigungsabschnitts 22 ist für die hier vorliegende Erfindung von untergeordneter Bedeutung.

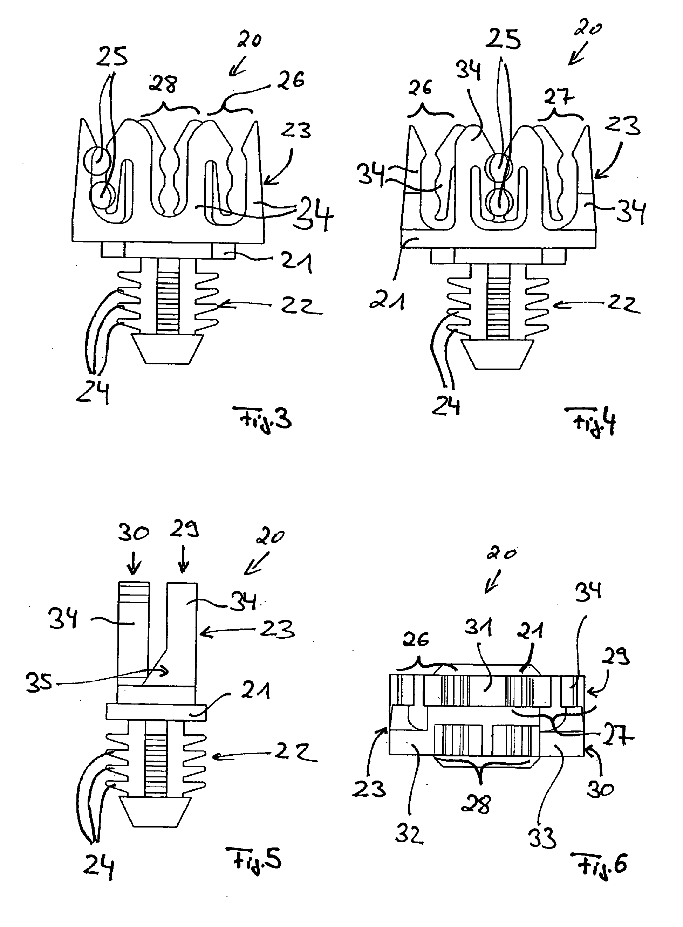

Die erfindungswesentlichen Details des erfindungsgemäßen Patchkabel-Clips 20 betreffen die Ausgestaltung des Halteabschnitts 23 zur lösbaren Befestigung von Patchkabeln am Patchkabel-Clip 20. In Fig. 3 und 4 sind aufzunehmende Patchkabel mit der Bezugsziffer 25 gekennzeichnet.

Der Halteabschnitt 23 des erfindungsgemäßen Patchkabel-Clips 20 verfügt über mehrere clipartige Halteelemente 26, 27 und 28. Jedes der Halteelemente 26, 27 und 28 dient der Aufnahme von zwei Patchkabeln. Erfindungsgemäß sind die Halteelemente 26, 27 und 28 des Halteabschnitts 23 in zwei Richtungen versetzt zueinander angeordnet, und zwar derart, dass die Halteelemente 26, 27 und 28 in hintereinander angeordneten Ebenen 29 und 30 positioniert sind. Wie Fig. 1 bis 6 entnommen werden kann, sind in der Ebene 29 die beiden Halteelemente 26 und 27 seitlich zueinander versetzt angeordnet, in der Ebene 30 ist hingegen lediglich das Halteelement 28 positioniert. Das in der Ebene 30 positionierte Halteelement 28 ist dabei seitlich versetzt zu den in der Ebene 29 mit Abstand zueinander positionierten Halteelementen 26 und 27 angeordnet. In der Ebene 29 sind demnach die beiden Halteelemente 26 und 27 seitlich nebeneinander und mit Abstand voneinander positioniert, in der Ebene 30 ist ein Halteelement 28 angeordnet. Das in der Ebene 30 positionierte Halteelement 28 ist dabei seitlich zu den in der Ebene 29 positionierten Halteelementen 26 und 27 versetzt, und zwar derart, dass in einer Projektion das Haltelement 28 der Ebene 30 zwischen den beiden Halteelementen 26, 27 der Ebene 29 liegt. Dies kann am besten Fig. 3, 4 und 6 entnommen werden.

Wie Fig. 1 bis 6 weiter entnommen werden kann, ist zwischen den beiden Halteelementen 26 und 27 der Ebene 29 ein Durchführbereich 31 für Patchkabel ausgebildet, um Patchkabel zwischen den beiden Halteelementen 26 und 27 der Ebene 29 hindurchzuführen und dem Halteelement 28 der Ebene 30 zuzuführen. Ebenso ist zu beiden Seiten des Halteelements 28 der Ebene 30 jeweils ein Durchführbereich 32 und 33 für Patchkabel vorhanden, um dieselben seitlich neben dem Halteelement 28 der Ebene 30 vorbeizuführen und den Halteelementen 26 bzw. 27 der Ebene 29 zuzuführen.

Jedes der Halteelemente 26, 27 und 28 des Halteabschnitts 23 des erfindungsgemäßen Patchkabel-Clips 20 wird von zwei relativ zueinander bewegbaren Halteschenkeln 34 gebildet. Die Halteschenkel 34 sind dabei entweder I-förmig oder U-förmig ausgeführt. So sind die beiden Halteschenkel 34 des Halteelements 28 der Ebene 30 U-förmig ausgebildet, ebenso wie die jeweils innenliegenden Halteschenkel 34 der Halteelemente 26 und 27 der Ebene 29. Die außenliegenden Halteschenkel 34 der Halteelemente 26 und 27 der Ebene 29 sind hingegen I-förmig ausgeführt. Die relative Beweglichkeit von zwei benachbarten Halteschenkeln 34 eines Halteelements 26, 27 bzw. 28 zueinander wird in erster Linie durch die U-förmig ausgebildeten Halteschenkel 34 gewährleistet, die im Vergleich zu den I-förmig ausgeführten Halteschenkeln relativ leicht bzw. mit einem relativ geringen Kraftaufwand verschwenkbar bzw. bewegbar sind.

Jeweils zwei Halteschenkel 34 bilden ein clipartiges Halteelement 26, 27 und 28, wobei zumindest die Kontur jeweils eines Halteschenkels 34 an die Kontur der aufzunehmenden Patchkabel 25 angepasst ist. So kann Fig. 1 bis 6 entnommen werden, dass die U-förmig ausgeführten Halteschenkel 34 an Klemmflächen abschnittsweise kreissegmentförmig konturiert sind, wobei die kreissegmentförmige Konturierung dieser Halteschenkel an den Durchmesser der aufzunehmenden Patchkabel 25 angepasst ist. An dieser Stelle sei darauf hingewiesen, dass vorzugsweise Patchkabel mit einem Durchmesser von 1,5 mm bis 3 mm, vorzugsweise mit einem Durchmesser von 2 mm, in den Halteelementen 26, 27 und 28 des Halteabschnitts 23 aufgenommen werden.

Wie insbesondere Fig. 1, 2 und 5 entnommen werden kann, sind die außenliegenden Halteschenkel 34 der Halteelemente 26 und 27 der Ebene 29 in einem unteren Bereich 35 verbreitert und damit relativ steif ausgeführt. Hierdurch wird gewährleistet, dass sich beim Klemmen bzw. Befestigen eines Patchkabels in den Halteelementen 26 und 27 lediglich die innenliegenden Halteschenkel 34 verbiegen.

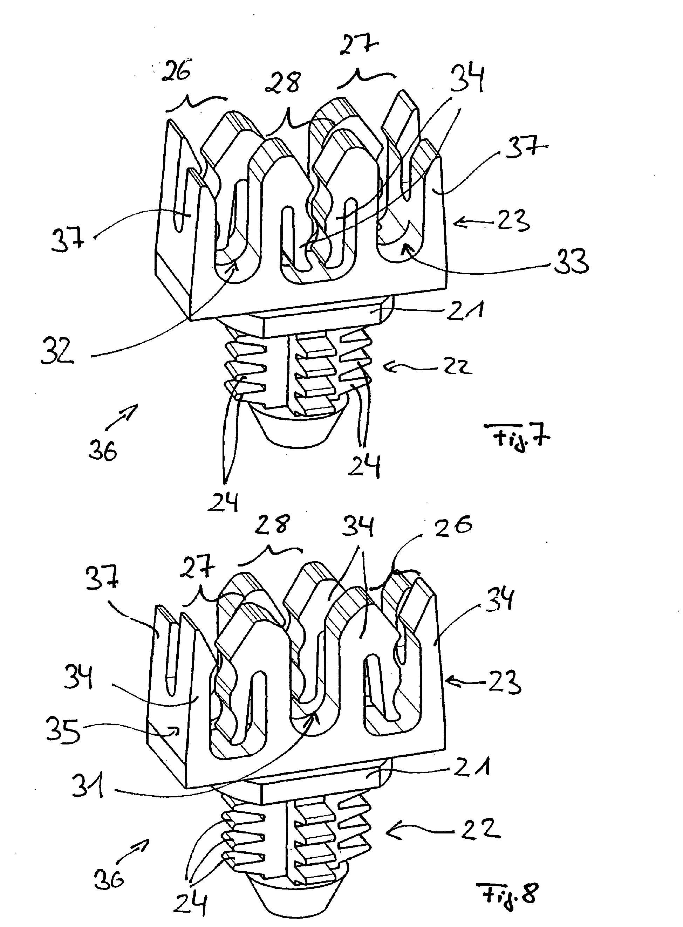

Fig. 7 bis 12 zeigen ein zweites Ausführungsbeispiel eines erfindungsgemäßen Patchkabel-Clips 36 in verschiedenen Ansichten, wobei der Patchkabel-Clip 36 des Ausführungsbeispiels gemäß Fig. 7 bis 12 im Wesentlichen dem Patchkabel-Clip 20 des Ausführungsbeispiels der Fig. 1 bis 6 entspricht. Daher werden zur Vermeidung unnötiger Wiederholungen für gleiche Baugruppen gleiche Bezugsziffern verwendet und es wird auf die Ausführungen zum Ausführungsbeispiel der Fig. 1 bis 6 verwiesen. Nachfolgend wird nur auf die Details eingegangen, die den Patchkabel-Clip 36 der Fig. 7 bis 12 vom Patchkabel-Clip 20 der Fig. 1 bis 6 unterscheiden.

Der Patchkabel-Clip 36 des Ausführungsbeispiels der Fig. 7 bis 12 unterscheidet sich vom Patchkabel-Clip 20 des Ausführungsbeispiels der Fig. 1 bis 6 lediglich dadurch, dass die Halteschenkel 34, welche die Halteelemente 26 und 27 außen begrenzen, unter Ausbildung jeweils eines zusätzlichen Schenkels 37 in den Bereich der Ebene 30 verlängert sind. Durch diese zusätzlichen Schenkel 37 wird vermieden, dass bei einer seitlichen Auslenkung eines in den Halteelementen 26 und 27 aufgenommen Patchkabels der innenliegende Halteschenkel 34 der Halteelemente 26 und 27 nach innen gedrückt und damit aufgeweitet wird. Ein unbeabsichtigtes Lösen der clipartigen Klemmverbindung des aufgenommenen Patchkabels wird so vermieden.

Beiden gezeigten Ausführungsbeispielen ist gemeinsam, dass die clipartigen Halteelemente 26, 27 und 28 in zwei Richtungen zueinander versetzt und damit in zwei Ebenen positioniert sind. Die in den beiden Ebenen positionierten Halteelemente sind dabei seitlich versetzt zueinander angeordnet, sodass in der Projektion die in unterschiedlichen Ebenen positionierten Halteelemente allesamt seitlich zueinander versetzt sind.

### Bezugszeichenliste

- 20: Patchkabel-Clip
- 21: Grundkörper
- 22: Befestigungsabschnitt
- 23: Halteabschnitt
- 24: Verankerungselement
- 25: Patchkabel
- 26: Halteelement
- 27: Halteelement
- 28: Halteelement
- 29: Ebene
- 30: Ebene
- 31: Durchführbereich
- 32: Durchführbereich
- 33: Durchführbereich
- 34: Halteschenkel
- 35: Bereich
- 36: Patchkabel-Clip
- 37: Schenkel

## Patentansprüche

1. Kabelclip, insbesondere Lichtwellenleiter-Patchkabel-Clip, mit einem Grundkörper (21), wobei der Grundkörper (21) einen Befestigungsabschnitt (22) mit mehreren widerhakenartigen Verankerungselementen (24) zur lösbaren Befestigung des Kabelclips in einem Loch eines Trägers und einen mindestens zwei clipartige Halteelemente (26, 27, 28) aufweisenden Halteabschnitt (23) aufweist, und wobei jedes Halteelement (26, 27, 28) des Halteabschnitts (23) der Aufnahme jeweils mindestens eines Kabels, insbesondere jeweils mindestens eines Patchkabels (25), dient, und wobei jedes der Halteelemente (26, 27, 28) des Halteabschnitts (23) von zwei relativ zueinander bewegbaren Halteschenkeln (34) gebildet ist, **dadurch gekennzeichnet, dass** die clipartigen Halteelemente (26, 27, 28) des Halteabschnitts (23) derart in zwei Richtungen zueinander versetzt angeordnet sind, dass die Halteelemente (26, 27, 28) in hintereinander angeordneten Ebenen (29, 20) positioniert sind, derart, dass in einer ersten Ebene (29) zwei Halteelemente (26, 27) seitlich nebeneinander positioniert sind, dass in der zweiten Ebene (30) ein Halteelement (28) positioniert ist, wobei das in der zweiten Ebene (30) positionierte Halteelement (28) derart seitlich zu den in der ersten Ebene (29) positionierten Halteelementen (26, 27) versetzt ist, dass es in der Projektion zwischen den beiden Halteelementen (26, 27) der ersten Ebene (29) angeordnet ist, und dass die Halteschenkel (34) entweder I-förmig oder U-förmig ausgeführt sind, nämlich derart, dass die beiden Halteschenkel (34) des Halteelements (28) der zweiten Ebene (30) beide U-förmig ausgebildet sind, und dass die innenliegenden Halteschenkel (34) der Halteelemente (26, 27) der ersten Ebene (29) U-förmig und die außenliegenden Halteschenkel (34) desselben I-förmig ausgeführt sind.

2. Kabelclip nach Anspruch 1, **dadurch gekennzeichnet, dass** die in den hintereinander angeordneten Ebenen positionierten Halteelemente (26, 27, 28) in der Projektion allesamt seitlich zueinander versetzt sind.

3. Kabelclip nach Anspruch 1 oder 2, **dadurch gekennzeichnet, dass** zwischen den beiden Halteelementen (26, 27) der ersten Ebene (29) ein Durchführbereich (31) für Kabel ausgebildet ist.

4. Kabelclip nach einem oder mehreren der Ansprüche 1 bis 3, **dadurch gekennzeichnet, dass** seitlich neben dem Halteelement (28) der zweiten Ebene (30) Durchführbereiche (32, 33) für Kabel ausgebildet sind.

5. Kabelclip nach einem oder mehreren der Ansprüche 1 bis 4, **dadurch gekennzeichnet, dass** jedes Halteelement (26, 27, 28) der Aufnahme von jeweils mindestens einem Kabel mit einem Durchmesser von 1,5 mm bis 3 mm dient.

6. Kabelclip nach einem oder mehreren der Ansprüche 1 bis 5, **dadurch gekennzeichnet, dass** jedes Halteelement (26, 27, 28) der Aufnahme von jeweils mindestens zwei Kabeln dient.

## Claims

1. Cable clip, in particular an optical waveguide patch cable clip, having a base body (21), with the base body (21) having a fastening section (22) with a plurality of barb-like anchoring elements (24) for detachably fastening the cable clip in a hole in a support and having a retaining section (23) which has at least two clip-like retaining elements (26, 27, 28), and with each retaining element (26, 27, 28) of the retaining section (23) serving to hold in each case at least one cable, in particular in each case at least one patch cable (25), and with each of the retaining elements (26, 27, 28) of the retaining section (23) being formed by two retaining limbs (34) which can be moved relative to one another, **characterized in that** the clip-like retaining elements (26, 27, 28) of the retaining section (23) are arranged so as to be offset in relation to one another in two directions in such a way that the retaining elements (26, 27, 28) are positioned in planes (29, 30), which are arranged one behind the other, in such a way that two retaining elements (26, 27) are positioned laterally next to one another in a first plane (29), that a retaining element (28) is positioned in the second plane (30), with the retaining element (28) which is positioned in the second plane (30) being laterally offset to the retaining elements (26, 27), which are positioned in the first plane (29), in such a way that the first plane (29) is arranged in the projection between the two retaining elements (26, 27) of the first plane (29), and **in that** the retaining limbs (34) are either of 1-shaped or U-shaped design, specifically in such a way that the two retaining limbs (34) of the retaining element (28) of the second plane (30) are both of U-shaped design, and **in that** the internal retaining limbs (34) of the retaining elements (26, 27) of the first plane (29) are of U-shaped design and the external retaining limbs (34) thereof are of 1-shaped design.

2. Cable clip according to Claim 1, **characterized in that** the retaining elements (26, 27, 28) which are positioned in the planes which are arranged one behind the other are all laterally offset in relation to one another in projection.

3. Cable clip according to Claim 1 or 2, **characterized in that** a leadthrough region (31) for cables is formed between the two retaining elements (26, 27) of the first plane (29).

4. Cable clip according to one or more of Claims 1 to 3, **characterized in that** leadthrough regions (32, 33) for cables are formed laterally next to the retaining element (28) of the second plane (30).

5. Cable clip according to one or more of Claims 1 to 4, **characterized in that** each retaining element (26, 27, 28) serves to hold in each case at least one cable with a diameter of 1.5 mm to 3 mm.

6. Cable clip according to one or more of Claims 1 to 5, **characterized in that** each retaining element (26, 27, 28) serves to hold in each case at least two cables.

## Revendications

1. Serre-câble, en particulier clip de câble de raccordement à fibres optiques, comprenant un corps de base (21), le corps de base (21) comprenant une section de fixation (22) dotée de plusieurs éléments d'ancrage en forme de crochets (24) pour la fixation amovible du serre-câble dans un trou d'un support, et une section de retenue (23) comprenant au moins deux éléments de retenue en forme de clips (26, 27, 28), et chaque élément de retenue (26, 27, 28) de la section de retenue (23) servant à recevoir à chaque fois au moins un câble, en particulier à chaque fois au moins un câble de raccordement (25), et chacun des éléments de retenue (26, 27, 28) de la section de retenue (23) étant formé par deux branches de retenue (34) mobiles l'une par rapport à l'autre, **caractérisé en ce que** les éléments de retenue en forme de clips (26, 27, 28) de la section de retenue (23) sont disposés de manière décalée les uns par rapport aux autres dans deux directions de telle sorte que les éléments de retenue (26, 27, 28) soient positionnés dans des plans disposés l'un derrière l'autre (29, 30), de telle sorte que deux éléments de retenue (26, 27) soient positionnés latéralement l'un à côté de l'autre dans un premier plan (29), et qu'un élément de retenue (28) soit positionné dans le deuxième plan (30), l'élément de retenue (28) positionné dans le deuxième plan (30) étant décalé latéralement par rapport aux éléments de retenue (26, 27) positionnés dans le premier plan (29), de telle sorte qu'il soit disposé en projection entre les deux éléments de retenue (26, 27) du premier plan (29), et **en ce que** les branches de retenue (34) sont réalisées soit en forme de I soit en forme de U, à savoir de telle sorte que les deux branches de retenue (34) de l'élément de retenue (28) du deuxième plan (30) soient toutes deux réalisées en forme de U, et que les branches de retenue (34), situées à l'intérieur, des éléments de retenue (26, 27) du premier plan (29) soient réalisées en forme de U et que les branches de retenue (34), situées à l'extérieur, de ces derniers soient réalisées en forme de I.

2. Serre-câble selon la revendication 1, **caractérisé en ce que** les éléments de retenue (26, 27, 28) positionnés dans les plans disposés l'un derrière l'autre sont tous décalés latéralement les uns par rapport aux autres en projection.

3. Serre-câble selon la revendication 1 ou 2, **caractérisé en ce qu**'une région de passage (31) pour des câbles est réalisée entre les deux éléments de retenue (26, 27) du premier plan (29).

4. Serre-câble selon l'une quelconque ou plusieurs des revendications 1 à 3, **caractérisé en ce que** des régions de passage (32, 33) pour des câbles sont réalisées latéralement près de l'élément de retenue (28) du deuxième plan (30).

5. Serre-câble selon l'une quelconque ou plusieurs des revendications 1 à 4, **caractérisé en ce que** chaque élément de retenue (26, 27, 28) sert à recevoir à chaque fois au moins un câble présentant un diamètre de 1,5 mm à 3 mm.

6. Serre-câble selon l'une quelconque ou plusieurs des revendications 1 à 5, **caractérisé en ce que** chaque élément de retenue (26, 27, 28) sert à recevoir à chaque fois au moins deux câbles.
